Europäisches Patentamt

**European Patent Office**

**Office européen des brevets**

(19)

(11) Numéro de publication: **0 220 987**
**B1**

(12)                    **FASCICULE DE BREVET EUROPEEN**

(45) Date de publication du fascicule du brevet:
**14.06.89**

(51) Int. Cl.⁴: **B60T 13/24**

(21) Numéro de dépôt: **86402308.0**

(22) Date de dépôt: **15.10.86**

---

(54) Servomoteur à dépression d'assistance au freinage et procédé de réglage d'un tel servomoteur.

---

(30) Priorité: **22.10.85 FR 8515678**

(43) Date de publication de la demande:
**06.05.87 Bulletin 87/19**

(45) Mention de la délivrance du brevet:
**14.06.89 Bulletin 89/24**

(84) Etats contractants désignés:
**DE ES GB IT**

(56) Documents cités:
**EP-A- 0 158 552**
**GB-A- 2 084 274**
**US-A- 4 227 371**

(73) Titulaire: **BENDIX France Société Anonyme dite:,**
**126, rue de Stalingrad, F-93700 Drancy(FR)**

(72) Inventeur: **Gautier, Jean-Pierre, 46 ter, Avenue Louis**
**Blanc, F-93600 Aulnay-sous-Bois(FR)**

(74) Mandataire: **Lejet, Christian et al, Division Technique**
**Service Brevets BENDIX Europe 126, rue de Stalingrad,**
**F-93700 Drancy(FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

**Description**

La présente invention concerne les servomoteur à dépression d'assistance au freinage, plus particulièrement pour véhicules automobiles, du type comprenant : un boîtier comportant une partie arrière et divisé intérieurement en une chambre à dépression, ou chambre avant, et une chambre de travail, ou chambre arrière, par une structure de piston sollicitée par un ressort de piston vers la partie arrière du boîtier et comprenant un moyeu renfermant un moyen de valve de distribution comportant un premier siège de clapet, formé par le moyeu, un second siège de clapet, coaxial au premier siège de clapet et formé par l'extrémité d'un plongeur coulissant dans le moyeu et relié à une tige d'actionnement du servomoteur, et un élément de clapet monté dans le moyeu et sollicité axialement par un ressort de clapet vers les premier et second sièges de clapet pour coopérer avec ces derniers, un ressort de rappel de tige, coaxial à la tige et disposé entre le moyeu et un organe de butée tubulaire montée coulissant sur la tige et comportant, à l'opposé du ressort de rappel de tige, une première et une seconde surfaces d'appui destinées à coopérer respectivement avec une première butée, sur la tige, et une seconde butée, ou butée de référence ayant au moins une position de référence fixe.

Un servomoteur de ce type est décrit dans le document EP-A-0158552, dont le contenu est supposé intégré ici pour référence. L'agencement de servomoteur de ce document permet d'assurer une course morte nulle, la structure de piston et le plongeur de valve adoptant automatiquement des positions de repos relatives auto-adaptatives. Toutefois, pour permettre cette plage d'auto-adaptation, avec une position de repos finale, en condition d'utilisation du servomoteur, de la structure de piston décalée d'une certaine distance non parfaitement maîtrisable de la partie arrière du boîtier, la première butée, sur la tige, constituée typiquement par un bourrelet ou un épaulement ménagé en fabrication sur la tige, doit être volontairement décalée vers l'arrière pour tenir compte des chaînes de tolérances des organes de commande du moyen de valve. D'autre part, les positions de repos relatives auto-adaptatives de la structure de piston et du plongeur de valve, qui se traduisent par un avancement vers l'avant de la structure de piston et du plongeur de valve (et, partant, de la tige d'actionnement qui lui est associée), posent des problèmes pour ce qui est du réglage du contacteur de feux de stop quand celui-ci est associé à la pédale de frein qui est couplée à la tige d'actionnement du servomoteur.

La présente invention à pour objet de proposer un servomoteur perfectionné du type sus-mentionné permettant de réduire la plage d'auto-adaptation relative de la structure de piston et du plongeur de valve tout en garantissant la conservation d'une course morte nulle et permettant de résoudre les problèmes de réglage du contacteur de feux de stop associé à la pédale de frein.

Pour ce faire, selon l'invention, la première butée, sur la tige, est constituée d'une bague rapportée sur la tige et solidarisée à cette dernière dans une position déterminée.

Corrélativement, selon une autre caractéristique de l'invention, un procédé de réglage d'un servomoteur du type défini ci-dessus, est caractérisé en ce que, le servomoteur étant assemblé, avec la structure de piston en appui sur la partie arrière du boîtier sous l'effet du ressort de piston et l'organe de butée tubulaire en appui, par sa seconde surface d'appui, contre la seconde butée de référence, sous l'effet du ressort de rappel de tige, il comporte les étapes d'appliquer sur la tige d'actionnement un effort de traction pour amener le second siège de clapet en contact franc avec l'élément de clapet, de déplacer la bague sur la tige d'actionnement pour l'amener en contact avec la première surface d'appui de l'organe de butée tubulaire, et de solidariser la bague à la tige d'actionnement dans la position ainsi obtenue.

De cette façon, la structure de piston et le plongeur de valve sont placés initialement (en fabrication en usine) dans des positions très proches des positions de repos relatives auto-adaptatives qu'ils adopteront en condition d'utilisation du servomoteur in situ, lorsque la chambre à dépression sera connectée à une source de vide, le déplacement de l'ensemble tige/plongeur par rapport à cette position pré-réglée étant très faible et n'affectant donc pas le réglage initial du contacteur du feu de stop.

D'autres caractéristiques et avantages de la présente invention ressortiront de la description suivante de mode de réalisation, données à titre illustratif mais nullement limitatif, faite en relation avec les dessins annexés, sur lesquels :

la figure 1 est une vue en coupe longitudinale partielle de la partie arrière d'un servomoteur à dépression d'assistance au freinage selon l'invention ; et

les figures 2 et 3 sont des vues partielles représentant des variantes relatives à la bague butée et sa solidarisation à la tige d'actionnement.

Le servomoteur d'assistance au freinage selon l'invention comprend typiquement un boîtier, dont on reconnaît la partie centrale de la coquille arrière 1, divisé intérieurement en une chambre avant ou une chambre à dépression 2 et une chambre arrière ou chambre de travail 3 par une structure de piston, désignée généralement par la référence 4, comprenant, classiquement, un ensemble annulaire d'un diaphragme et d'une plaque de renfort rapporté sur un moyeu de piston 5, en matériau plastique, renfermant un moyen de valve de distribution 6 comme on le verra plus avant. La structure de piston 4 est sollicitée pour venir normalement en appui contre la partie arrière du boîtier, typiquement contre un renfort intérieur 7 fixé à la coquille arrière 1 et associé au moyens de fixation 8 du boîtier à une structure stationnaire du véhicule, par un ressort de rappel de piston 9 disposé dans la chambre de dépression 2 et prenant appui sur la coquille avant (non représentée) du boîtier. Dans une partie tubulaire arrière du moyeu 5 est disposé un élément de clapet annulaire elastique 10 présentant une face avant annulaire destinée à coopérer avec un premier siège de clapet annulaire 11 formé centralement dans le moyeu 5 et avec un second siège de clapet annulaire 12 formé par l'extrémité arrière d'un plongeur de valve 13 monté à coulissement dans un alésage central du moyeu 5 et solidarisé à une tige d'actionnement 14 du servomoteur. La face avant de l'élément de clapet 10 est sollicitée axialement dans la direction vers les premier et second sièges de clapet 11 et 12 par un ressort d'élément de clapet 15 coaxial à la tige 14 et prenant appui sur un support de l'élément de clapet 10 formant également appui pour un ressort de rappel de tige 16, également coaxial à cette dernière, et prenant son autre appui sur l'extrémité avant d'un fût tubulaire 17 d'un organe de butée tubulaire, désigné généralement par la référence 18, monté librement à coulissement sur une portion cylindrique de la tige d'actionnemnt 14. L'extrémité arrière de l'organe de butée 18 s'évase pour constituer une partie de collerette 19 de diamètre élargi comportant, sur la face arrière, des nervures angulairement réparties 20 formant centralement une première surface d'appui destinée à coopérer avec une première butée 21 sur la tige, et extérieurement, radialement, une seconde surface d'appui destinée à coopérer avec une seconde butée stationnaire constituée typiquement par la face intérieure avant d'une collerette d'extrémité s'étendant radialement vers l'intérieur 22 d'un organe d'arrêt ou capot tubulaire, désigné généralement par la référence 23, supporté par la partie arrière du boîtier de servomoteur.

Selon un aspect de l'invention, l'organe de butée tubulaire 18 est réalisé en matériau plastique, les nervures arrières 20 présentant un profil extérieur sensiblement hémisphérique centré sur le centre de la rotule d'extrémité 24 de la tige d'actionnement 14 sur laquelle est sertie le plongeur 13, la face intérieure avant de la collerette d'extrémité 22 du capot ou organe d'arrêt tubulaire 23 (également réalisé en matériau plastique rigide), étant également hémisphérique, de même rayon. Dans le mode de réalisation particulier représenté, l'extrémité avant du capot ou organe d'arrêt tubulaire 23 comporte des ergots s'étendant radialement vers l'intérieur 25 qui sont engagés dans une gorge périphérique d'une bague de guidage 26 montée dans la cheminée arrière 27 de la coquille arrière 1 et servant au guidage du moyeu 5.

Conformément à l'invention la première butée 21, sur la tige 14, est constituée d'une bague enfilée sur une portion de diamètre élargi 28 de la tige d'actionnement 14 et qui sera solidarisée à cette dernière, après réglage, de la façon qui va maintenant être décrite.

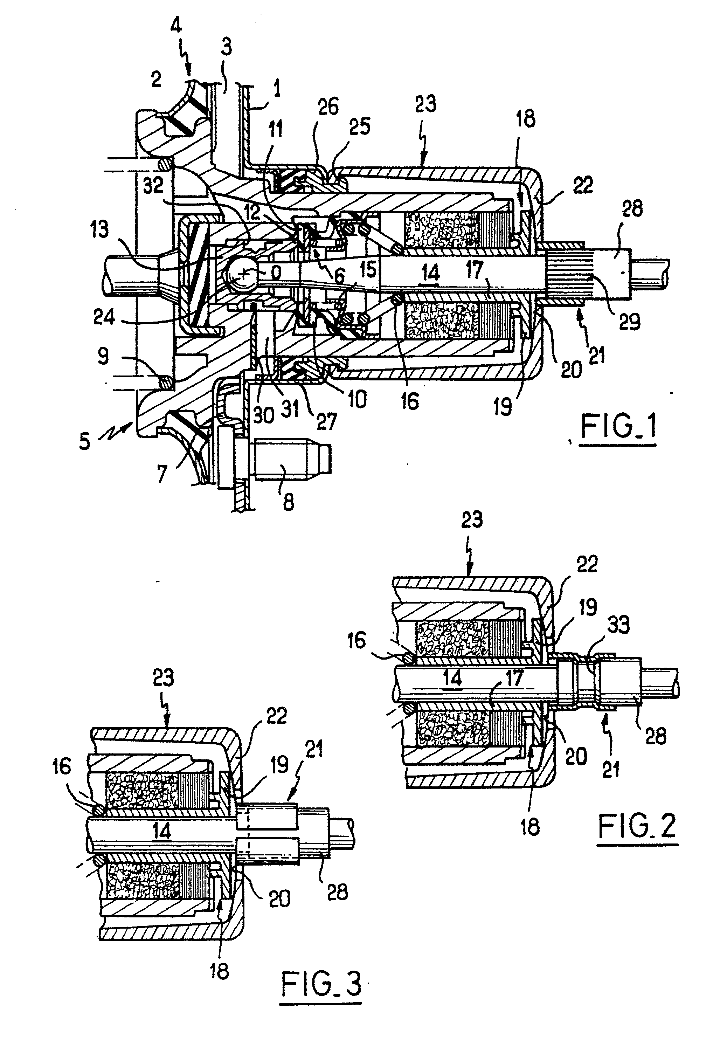

Le servomoteur est assemblé complètement, avec la structure de piston 5 en appui sur la partie arrière du boîtier, typiquement sur le renfort 7, sous l'effet du ressort de piston 9, et l'organe de butée tubulaire 18, en appui, par la seconde surface d'appui formée par les rainures 20, contre la butée stationnaire 22 constituée par l'organe d'arrêt tubulaire 23, sous l'effet du ressort de rappel 16, et la bague 21 non encore solidarisée à la portion de diamètre élargi 28 de la tige d'actionnement 14. Du fait du montage à coulissement libre de l'organe de butée tubulaire 17 sur la tige 14, cette dernière et le plongeur de valve 13 constituent un ensemble librement mobile axialement, dans une plage déterminée, par rapport aux autres composants du servomoteur. Dans cet état, on applique sur la tige d'actionnement 14 un effort de traction (vers la droite sur la figure 1) d'une valeur inférieure à 0,9 daN de façon à placer le second siège de clapet 12 en contact franc avec la face avant de l'élément de clapet 10 sans toutefois décoller ce dernier du premier siège de clapet 11 (la force du ressort de clapet 15 étant typiquement supérieure à 1 daN). En maintenant la tige 14 dans la position ainsi obtenue, on déplace la bague 21 par rapport à la portion de diamètre élargi 28 de la tige 14 pour amener sa face avant en contact avec la première surface de butée, centrale, constituée par les nervures 20 de l'organe de butée tubulaire 18 (ce dernier demeurant en contact, par sa seconde surface d'appui extérieure contre la butée stationnaire 22, la force du ressort de rappel de tige 16 étant typiquement supérieure à 8 daN). Dans la position de contact ainsi obtenue de la bague 21, celle-ci, réalisée par exemple en acier, est solidarisée à la portion de diamètre élargi 28 de la tige 14, par exemple par serrage avec déformation radiale en contraction sur des crantages 29 formés sur cette portion de diamètre élargi 28. Dans cette configuration finale de montage la face avant de l'élément de clapet 10 est donc en butée simultanément avec les deux sièges de clapet 11 et 12 sensiblement co-planaires. Lors de l'installation in situ du servomoteur, quand la chambre de dépression 2 est connectée à une source de vide, la structure de piston 5 se décollera très légèrement de sa butée sur la partie arrière du boîtier, comme représenté sur la figure 1, avant que cette structure de piston et le plongeur de valve réadoptent automatiquement les positions de repos relatives conservant la face avant de l'élément de clapet 10 en contact avec les deux sièges de clapet 11 et 12, compte tenu cette fois des pressurisations respectives des chambres 2 et 3, ce léger déplacement n'affectant toutefois sensiblement pas la pédale raccordée entre temps à l'extrémité extérieure de la tige d'actionnement 14 et ne modifiant pas le réglage effectué précédemment du contacteur de feu de stop associé à la pédale.

Le réglage de ce contacteur de stop imposant parfois d'effectuer sur la tige d'actionnement 14 du servomoteur un effort de traction important, dit "d'arrachement", le servomoteur comprendra avantageusement une clé d'arrêt 30 montée dans un passage d'air radial 31 formé dans le moyeu 5 et faisant communiquer l'alésage de coulissement du plongeur 13 avec la chambre de travail arrière 3, et s'étendant dans cet alésage pour coopérer avec au moins un épaulement dirigé vers l'arrière 32 formé périphériquement sur le plongeur 13 et constitué par une gorge annulaire périphérique dimensionnée de façon à permettre une surouverture au retour du moyen de valve 6 de façon connue en soi. De cette façon, en exerçant sur la tige d'actionnement 14 un effort de traction important, cet effort est transmis du plongeur 13 au moyeu 5 par la clé 30, le moyeu 5 revenant en butée arrière sur le renfort 7, sans que cet effort de traction n'affecte l'organe de butée tubulaire 18 et la butée stationnaire 22 du capot 23, ces deux élément pouvant donc, comme susmentionné, être réalisés en matériau plastique de qualité courante.

Dans le mode de réalisation de la figure 2, la bague 21, réalisée en aluminium ou en acier est solidarisée à la tige d'actionnement 14 dans la position adéquate par sertissage ou magnétoformage dans une gorge périphérique annulaire 33 formée dans la portion de diamètre élargi 28 de la tige d'actionnement 14. Dans le mode de réalisation de la figure 3, la bague 21 est une bague fendue qui est présentée écartée sur la portion de diamètre élargi 28 lors de la phase de réglage, la bague fendue étant autorisée à revenir se serrer étroitement sur la portion élargie 28 dans la positon adéquate obtenue.

## Revendications

1. Servomoteur à dépression d'assistance au freinage, comprenant : un boîtier comportant une partie arrière (1,7) et divisé intérieurement en une chambre à dépression (2) et une chambre de travail (3) par une structure de piston (4) sollicitée par un ressort de piston (9) vers la partie arrière du boîtier et comprenant un moyeu (5) renfermant un moyen de valve de distribution (6) comportant un premier siège de clapet (11), formé par le moyeu, un second siège de clapet (12), coaxial au premier siège de clapet (11) et formé par l'extrémité d'un plongeur de valve (13) coulissant dans le moyeu et relié à une tige d'actionnement (14) du servomoteur, et un élément de clapet (10) monté dans le moyeu et sollicité axialement par un ressort de clapet (15) vers les premier (11) et second (12) sièges de clapet pour coopérer avec ces derniers, un ressort de rappel de tige (16), coaxial à la tige (14) et disposé entre le moyeu et un organe de butée tubulaire (18) monté coulissant sur la tige (14) et comportant, à l'opposé du ressort de rappel de tige (16), une première et une seconde surfaces d'appui (20) destinées à coopérer respectivement avec une première butée (21), sur la tige (14), et une seconde butée (22) de référence, caractérisé en ce que la première butée est constituée d'une bague (21) montée sur la tige (14) et solidarisée à cette dernière dans une position obtenue après un deplacement determiné pendant l'assemblage de la tige (14) avec le servomoteur.

2. Servomoteur selon la revendication 1, caractérisé en ce que la seconde butée (22) de référence est formée par un organe d'arrêt tubulaire (23) en matériau plastique supporté sur le boîtier.

3. Servomoteur selon la revendication 1 ou la revendication 2, caractérisé en ce que l'organe de butée tubulaire (18) est réalisé en matériau plastique.

4. Servomoteur selon l'une des revendications 1 à 3, caractérisé en ce qu'il comporte une clé butée (30) montée dans le moyeu (5) et susceptible de coopérer avec au moins un épaulement périphérique (32) du plongeur de valve (13).

5. Servomoteur selon l'une des revendications précédentes, caractérisé en ce que l'organe de butée tubulaire (18) est monté sur une partie cylindrique de la tige d'actionnement (14), la bague (21) étant solidarisée à une portion de diamètre élargi (28) de la tige d'actionnement (14).

6. Procédé de réglage d'un servomoteur selon l'une quelconque des revendications précédentes, caractérisé en ce que, le servomoteur étant assemblé avec la structure de piston (4) en appui sur la partie arrière du boîtier (1,7) sous l'effet du ressort de piston (9) et l'organe de butée tubulaire (18) en appui, par sa seconde surface d'appui, contre la seconde butée (22) de référence sous l'effet du ressort de rappel de tige (16), il comporte les étapes d'appliquer sur la tige d'actionnement (14) un effort de traction pour placer le second siège de clapet (12) en contact franc avec l'élément de clapet (10), de déplacer la bague (21) sur la tige d'actionnement (14) pour l'amener en contact avec la première surface d'appui de l'organe de butée tubulaire (18), et de solidariser la bague (21) à la tige d'actionnement dans la position ainsi obtenue.

7. Procédé selon la revendication 6, caractérisé en ce que la bague (21) est solidarisée à la tige d'actionnement (14) par sertissage.

8. Procédé selon la revendication 6, caractérisé en ce que la bague (21) est solidarisée à la tige d'actionnement (14) par serrage.

## Claims

1. Braking assistance vacuum servomotor, comprising: a casing which comprises a rear portion (1, 7) and which is divided internally into a vacuum chamber (2) and a working chamber (3) by a piston structure (4) which is biased by a piston spring (9) towards a rear portion of the casing and which comprises a hub (5) enclosing a distribution valve means (6) which comprises a first valve seat (11), formed by the hub, a second valve seat (12) which is coaxial with said first valve seat (11) and is formed by the end of a valve plunger (13) which slides in the hub and which is connected to an actuating rod (14) of said servomotor, and a valve member (10) which is mounted in said hub and is biased axially by a valve spring (15) towards said first (11) and second (12) valve seats so as to cooperate with the latter, and a rod return spring (16), which is coaxial with said rod (14) and is arranged between said hub and a tubular stop member (18) slideably mounted on said rod (14) and which comprises, remote from said rod return spring (16), first and second bearing surfaces (20) which are intended to cooperate with a first stop (21) on said rod (14), and a second reference stop (22), respectively, characterized in that said first stop consists of a ring member (21) which is mounted on said rod (14) and which is firmly fixed to the latter in a position obtained after a determined movement during the assembling of said rod (14) with said servomotor.

2. Servomotor according to Claim 1, characterized in that said second reference stop (22) is formed by a tubular stop member (23) which is made of a plastic material and is supported by said casing.

3. Servomotor according to Claim 1 or Claim 2, characterized in that said tubular stop member (18) is made of a plastic material.

4. Servomotor according to one of Claims 1 to 3, characterized in that it comprises a stop key (30) which is mounted in said hub (5) and which is capable of cooperating with at least one peripheral shoulder (32) of said valve plunger (13).

5. Servomotor according to one of the preceding claims, characterized in that said tubular stop member (18) is mounted on a cylindrical portion of said actuating rod (14), said ring member (21) being firmly fixed to a portion of enlarged diameter (28) of said actuating rod (14).

6. A method for adjusting a servomotor according to any one of the preceding claims, characterized in that, said servomotor being assembled and said piston structure (4) bearing against the rear portion of said casing (1, 7) under the effect of said piston spring (9) and said tubular stop member (18) bearing, by its second bearing surface, against said second reference stop (22) under the effect of said rod return spring (16), it comprises the following steps: applying a pulling force to said actuating rod (14) to position said second valve seat (12) in full contact with said valve member (10), moving said ring member (21) on said actuating rod (14) so as to bring it into contact engagement with the first bearing surface of said tubular stop member (18), and firmly fixing said ring member (21) to said actuating rod in the position thus obtained.

7. Method according to Claim 6, characterized in that said ring member (21) is firmly fixed to said actuating rod (14) by crimping.

8. Method according to Claim 6, characterized in that said ring member (21) is firmly fixed to said actuating rod (14) by clamping.

**Patentansprüche**

1. Unterdruck-Servoantrieb für eine Bremshilfe, mit: einem einen rückwärtigen Teil (1, 7) umfassenden Gehäuse, das innerlich in eine Unterdruckkammer (2) sowie in eine Arbeitskammer (3) durch eine Kolbenstruktur (4) unterteilt ist, welche durch eine Kolbenfeder (9) zu dem rückwärtigen Teil des Gehäuses hin beaufschlagt ist, mit einer ein Verteilerventilmittel (6) enthaltenden Nabe (5), das einen ersten, durch die Nabe gebildeten Ventilsitz (11) sowie einen zweiten Ventilsitz (12) umfaßt, der zu dem ersten Ventilsitz (11) koaxial ist und durch das Ende eines Ventilkolbens (13) gebildet ist, der in der Nabe gleitet und mit einer Stange (14) zur Betätigung des Servoantriebs verbunden ist, mit einem Ventilglied (10), das in der Nabe angebracht und durch eine Ventilfeder (15) zu dem ersten Ventilsitz (11) sowie zu dem zweiten Ventilsitz (12) hin axial beaufschlagt ist, um mit diesen zusammenzuwirken, mit einer Feder (16) zum Rückholen der Stange, welche zu der Stange (14) koaxial ist und zwischen der Nabe und einem rohrförmigen Anschlagteil (18) angeordnet ist, das auf der Stange gleitend gelagert ist und auf der der Feder (16) zum Rückholen der Stange abgewandten Seite eine erste Stützfläche sowie eine zweite Stützfläche (20) umfaßt, welche dazu bestimmt sind, jeweils mit einem ersten Anschlag (21) an der Stange (14) und mit einem zweiten Referenzanschlag (22) zusammenzuwirken, dadurch gekennzeichnet, daß der erste Anschlag aus einem auf der Stange (14) angebrachten Ring (21) besteht, der mit dieser in einer Stellung fest verbunden ist, welche nach einer bestimmten Verschiebung während des Zusammenbaus der Stange (14) und des Servoantriebs erhalten wird.

2. Servoantrieb nach Anspruch 1, dadurch gekennzeichnet, da der zweite Referenzanschlag (22) durch ein auf dem Gehäuse abgestütztes rohrförmiges Anschlagteil (23) aus einem Kunststoff gebildet ist.

3. Servoantrieb nach Anspruch 1 oder 2, dadurch gekennzeichnet, daß das rohrförmige Anschlagteil (18) aus einem Kunststoff besteht.

4. Servoantrieb nach einem der Ansprüche 1 bis 3, dadurch gekennzeichnet, daß er einen Anschlagschlüssel (30) umfaßt, der in der Nabe (5) angebracht ist und mit wenigstens einer Umfangsschulter (32) des Ventilkolbens (13) zusammenwirken soll.

5. Servoantrieb nach einem der vorstehenden Ansprüche, dadurch gekennzeichnet, da das rohrförmige Anschlagteil (18) auf einem zylindrischen Teil der Beätigungsstange (14) angebracht ist, wobei der Ring (21) mit einem Abschnitt erweiterten Durchmessers (28) der Betätigungsstange (14) fest verbunden ist.

6. Verfahren zur Einstellung eines Servoantriebs nach einem der vorstehenden Ansprüche, dadurch gekennzeichnet, daß – da der Servoantrieb mit der Kolbenstruktur (4), die sich auf dem rückwärtigen Teil des Gehäuses (1, 7) abstützt, unter der Wirkung der Feder des Kolbens (9) verbunden ist, und da das rohrförmige Anschlagteil (18) durch seine zweite Stützfläche sich auf den zweiten Referenzanschlag (22) unter der Wirkung der Feder zum Rückholen der Stange (16) abstützt – es die folgenden Schritte umfaßt: auf die Stange (14) wird eine Zugkraft ausgeübt, um den zweiten Ventilsitz (12) in volle Berührung mit dem Ventilelement (10) zu bringen, der Ring (21) wird auf der Betätigungsstange (14) so verschoben, daß er mit der ersten Abstützfläche des rohrförmigen Anschlagteils (18) in Berührung kommt, und der Ring (21) wird mit der Betätigungsstange in der so erhaltenen Stellung fest verbunden.

7. Verfahren nach Anspruch 6, dadurch gekennzeichnet, daß der Ring (21) durch Verstemmen mit der Betätigungsstange (14) fest verbunden wird.

8. Verfahren nach Anspruch 6, dadurch gekennzeichnet, daß der Ring (21) durch Verspannen mit der Betätigungsstange (14) fest verbunden wird.

FIG.1

FIG.2

FIG.3